# EUROPEAN PATENT SPECIFICATION

(11) **EP 2 516 912 B1**
(45) Date of publication and mention of the grant of the patent: **08.04.2015**
(21) Application number: 09801444.2
(22) Date of filing: 21.12.2009
(51) Int. Cl.: F16L 19/06, F16L 19/07, G01N 30/60

(54) **FITTING ELEMENT WITH FRONT SIDE SEAL**
PASSELEMENT MIT VORDERSEITIGER DICHTUNG
ÉLÉMENT DE FIXATION DOTÉ D'UN JOINT D'ÉTANCHÉITÉ SUR LA FACE AVANT

(43) Date of publication of application: 31.10.2012
(73) Proprietor: Agilent Technologies, Inc., Santa Clara, California 95051 (US)
(72) Inventor: DEHMER, Bernhard, 76337 Waldbronn (DE)
(74) Representative: Dilg, Haeusler, Schindelmann Patentanwaltsgesellschaft mbH
(86) International application number: PCT/EP2009/067646
(87) International publication number: WO 2011/076244

(56) References cited:
- EP-A1- 1 486 715
- WO-A1-2006/091952
- WO-A1-2010/000324
- WO-A2-94/24466
- DE-A1- 3 143 369
- US-A- 5 033 435

## Description

### BACKGROUND ART

The present invention relates to a fitting element for a fluidic device, in particular in a high performance liquid chromatography application.

In high performance liquid chromatography (HPLC), a liquid has to be provided usually at a very controlled flow rate (e. g. in the range of microliters to milliliters per minute) and at high pressure (typically 20-100 MPa, 200-1000 bar, and beyond up to currently 200 MPa, 2000 bar) at which compressibility of the liquid becomes noticeable. For liquid separation in an HPLC system, a mobile phase comprising a sample fluid with compounds to be separated is driven through a stationary phase (such as a chromatographic column), thus separating different compounds of the sample fluid which may then be identified.

The mobile phase, for example a solvent, is pumped under high pressure typically through a column of packing medium (also referred to as packing material), and the sample (e.g. a chemical or biological mixture) to be analyzed is injected into the column. As the sample passes through the column with the liquid, the different compounds, each one having a different affinity for the packing medium, move through the column at different speeds. Those compounds having greater affinity for the packing medium move more slowly through the column than those having less affinity, and this speed differential results in the compounds being separated from one another as they pass through the column.

The mobile phase with the separated compounds exits the column and passes through a detector, which identifies the molecules, for example by spectrophotometric absorbance measurements. A two-dimensional plot of the detector measurements against elution time or volume, known as a chromatogram, may be made, and from the chromatogram the compounds may be identified. For each compound, the chromatogram displays a separate curve or "peak". Effective separation of the compounds by the column is advantageous because it provides for measurements yielding well defined peaks having sharp maxima inflection points and narrow base widths, allowing excellent resolution and reliable identification of the mixture constituents. Broad peaks, caused by poor column performance, so called "Internal Band Broadening" or poor system performance, so called "External Band Broadening" are undesirable as they may allow minor components of the mixture to be masked by major components and go unidentified.

An HPLC column typically comprises a stainless steel tube having a bore containing a packing medium comprising, for example, silane derivatized silica spheres having a diameter between 0.5 to 50 µm, or 1-10 µm or even 1-7 µm. The medium is packed under pressure in highly uniform layers which ensure a uniform flow of the transport liquid and the sample through the column to promote effective separation of the sample constituents. The packing medium is contained within the bore by porous plugs, known as "frits", positioned at opposite ends of the tube. The porous frits allow the transport liquid and the chemical sample to pass while retaining the packing medium within the bore. After being filled, the column may be coupled or connected to other elements (like a control unit, a pump, containers including samples to be analyzed) by e.g. using fitting elements. Such fitting elements may contain porous parts such as screens or frit elements.

During operation, a flow of the mobile phase traverses the column filled with the stationary phase, and due to the physical interaction between the mobile and the stationary phase a separation of different compounds or components may be achieved. In case the mobile phase contains the sample fluid, the separation characteristics is usually adapted in order to separate compounds of such sample fluid. The term compound, as used herein, shall cover compounds which might comprise one or more different components. The stationary phase is subject to a mechanical force generated in particular by a hydraulic pump that pumps the mobile phase usually from an upstream connection of the column to a downstream connection of the column. As a result of flow, depending on the physical properties of the stationary phase and the mobile phase, a relatively high pressure occurs across the column.

Fittings for coupling different components, such as separation columns and conduits, of fluidic devices are commercially available and are offered, for instance, by the company Swagelok (see for instance http://www.swagelok.com). A typical tube fitting is disclosed in US 5,074,599 A.

US 6,494,500 discloses a self-adjusting high pressure liquid connector for use with high pressure liquid chromatography (HPLC) columns requiring liquid-tight and leak free seals between fittings and unions.

WO 2005/084337 discloses a coupling element comprising a male sealing element. The male sealing element may have a generally cylindrical shape, and defines a fluid passageway therethrough for the transmission of fluid. The male sealing element is secured to a ferrule which is located within a cavity of the nut. The coupling element also has a biasing element disposed between a retaining ring and the ferrule located within the nut cavity. This biasing element facilitates a fluid-tight, metal to metal (or metal to plastic, or plastic to plastic) seal between the male sealing element and female sealing element.

International Application PCT/EP2008/058639 discloses a fitting for coupling a tubing to another component of a fluidic device, the fitting comprising a male piece having a front ferrule and a back ferrule both being slidable on the tubing, the male piece further having a first joint element configured slidably on the tubing, and a female piece having a recess configured for accommodating the front ferrule and the tubing and having a second joint element configured to be joinable to the first joint element, wherein the back ferrule is configured in such a manner that, upon joining the first joint element to the second joint element, the back ferrule exerts a pressing force on the front ferrule to provide a sealing between the front ferrule and the female piece, and the back ferrule exerts a grip force between the male piece and the tubing.

A low pressure fitting is known from US 4,690,437 A. A ferrule of a resilient, deformable plastic material has a cylindrical forward portion for sealingly engaging.

US 4,565,632 A discloses a chromatographic cartridge column system with press fitted end caps.

US 5,614,154 A discloses a connecting capillary comprising a glass capillary surrounded in its end region by a sheath of PEEK or a PEEK-derivative.

A biocompatible column for use in liquid chromatography applications is known from US 5,651,885 A.

US 5,540,464 A discloses a capillary connector.

US 4,619,473 A describes a fluid passage connector for liquid chromatograph comprising a tube having a flat portion at one end and a seal seat surface. A similar device is known from the document "Viper Capillaries and Finger Tight Fitting System", Dionex, http://www.dionex.com/en-us/webdocs/78632 DS-Viper-Capillaries-17Jul2009-LPN2283.pdf.

WO 2009/088663 A1 discloses liquid-chromatography conduit assemblies having high-pressure seals. A fluid-tight seal, proximal to the joint between two conduits, is provided, for example, through use of pressure, while a stabilizing seal, distal to the joint, is provided by adhering the conduits to the tube.

A high pressure connect fitting is disclosed at US 2008/0237112 A1. A tip of a seal contacts the walls of a tapered sealing cavity to form a primary seal. The volume of space between the very end of the tip and the end of a sealing cavity defines a dead space. As the seal is axially compressed within an annular recess, the tip engages the walls of the tapered sealing cavity to form the primary seal, and further deforms to occupy space otherwise associated with the dead space. As the tip of the seal engages the tapered sealing cavity, the end face of the seal compresses against the end of the annular recess to form a secondary seal extending radially around the tip of the seal.

Connector for tubing is disclosed in US 4,165,893 A. A tube extends through a central through-bore in the plug member and through a retaining cup member and through a similar axial through-bore in a cylindrical block of resiliently deformable plastics material such as Polytetrafluoroethylene. This cylindrical block is held captive within the cup member and includes a plain end face.

### DISCLOSURE

It is an object of the invention to provide an improved fitting, in particular for HPLC applications. The object is solved by the independent claim(s). Further embodiments are shown by the dependent claim(s).

According to the present invention as specified in claim 1, a fitting element is configured for providing a fluidic coupling to a fluidic device. The fitting element comprises a tubing, and a inlay located in a cavity of a front side of the tubing. The inlay protrudes over the front side, at least before coupling of the tubing to the fluidic device. Upon coupling of the tubing to the fluidic device, the front side is fitted to the fluidic device for connecting a fluid path of the tubing to a fluid path of the fluidic device, and the inlay provides a sealing of the fluid path of the tubing and the fluidic device.

The fitting element according to the invention thus provides a front-sided sealing of the tubing at the transition to the fluidic device. The sealing properties can be adapted and adjusted to the respective application, in particular by the design parameters such as material of the inlay, size and shape of the inlay, and height of protrusion of the inlay over the front side of the tubing. By adequately selecting such design parameters, the inlay will be pressed against the front side when the tubing is coupled to fluidic device, and will thus provide a sealing.

In case the inlay is provided of a material which can be deformed under the influence of pressure when coupling the tubing to the fluidic device, such as a polymer material (e.g. PEEK), the tubing may provide a stopper functionality, so that the inlay is only deformed until the front side is reached. In other words, deformation of the inlay will only occur until the protruding portion of the inlay has been deformed. This allows limiting the amount of deformation and allows ensuring that the fluid flow path is not excessively narrowed under the influence of continuing pressure.

The inlay is formed into the cavity, which cavity is situated in the center of the front side of the tubing. The inlay may be form-fitted and/or pressed-fitted into the cavity. The inlay may be fixed into the cavity by applying a direct molding process, a welding process, a gluing process and/or thermal process. Such thermal process may be any or a combination of thermoforming, recasting, remelting, partial heating, Laser heating, and ultrasonic heating. The inlay may be preformed (outside the cavity) and then inserted into the cavity. Alternatively, the inlay may also be directly formed into the cavity, e.g. by injection molding whereas the tubing has to be placed within the injection mold while injecting the polymeric material.

The inlay is preferably fixedly coupled into the cavity, and may result in an integral part to the tubing. This allows that the inlay stays fixed to tubing even when removing the tubing from the fluidic device after it has been coupled thereto. This can overcome a common problem in conventional fittings, such as in the aforementioned US 4,619,473 type fittings, that a part of the fitting (in particular the front-sided sealing) may stick/remain in a receiving cavity of the fluidic device after removal of the fitting element. In applications e.g. where the inlay may (partly) remain in the receiving cavity after opening the fitting, the inlay may also be loosely inserted into the cavity. Alternatively, the inlay may be provided of a material, which allows that the inlay will be fixedly formed into the cavity under application of pressure when coupling the tubing to the fluidic device.

For fixedly coupled the inlay into the cavity, preferably a thermal process can be used, since a melting contact to the tubing may prevent gaps or voids which may cause further artifacts in liquid guiding, e.g. external band broadening or carry over.

In one embodiment, the inlay extends laterally over the cavity and at least partly onto the front side of the tubing. In other words, the inlay extends radially over the boundaries of the cavity, so that a portion of the inlay sits on at least a portion of the front side of the tubing. This combines the sealing properties of the inlay with a squeeze-type gasket but may also limit/reduce the stopper functionality provided by the tubing.. In order to limit the sealing provided by the cavity to the front side only, the inlay may be laterally (or radially) limited to the front side only and thus not extend to the lateral side(s) of the tubing, e.g. in order ensure that the tubing can be removed from the fluidic device after coupling.

In one embodiment the inlay only fills the cavity within the tubing, and the protrusion of the inlay deforms without lateral deformation into a gap between tubing and fluidic device, when being compressed.

The terms "radial" and "axial", as used herein, shall defined with respect to the tubing having an axial direction in the direction of the fluid flow and a radial direction perpendicular to the axial direction. The tubing extends in axial direction, and the flow path of the tubing is radially enclosed by the tubing.

In one embodiment, the inlay comprises a flow path, so that when the tubing is coupled to the fluidic device, the flow path of the inlay is (smoothly) coupled between the flow paths of the tubing and the fluidic device. In other words, the inlay provides a portion of the fluid flow path which guides the liquid and may thus reduce or disturbances. In one embodiment, the cavity is located in a center position of the front side of the tubing and opening into the flow path of the tubing.

In one embodiment, the inlay comprises an outer surface which is facing the fluidic device upon coupling. The outer surface may comprise a structure configured for increasing surface pressure between the inlay and the fluidic device when the tubing is coupled to the fluidic device. Such increasing surface pressure may improve the sealing properties, for example by allowing withstanding higher pressure. Further, such structure may also allow reducing the material (of the inlay) involved when tightened. In other words, by adequately designing the structure the material which has to be displaced under the influence of pressure for providing the desired sealing characteristic can be reduced. The structure may comprise one or more indentations, preferably (radially) concentric indentations, one or more protrusions, preferably (radially) concentric protrusions, one or more micro-cavities or other kind of inclusions for further acceptance of sealing components or impregnation, or any kind of combination thereof. Within this cavities or inclusions, a material different to that of the inlay can be fixed. Such material may be of lowered strength and/or increased formability and/or affecting a wetting behavior (e.g. a hydrophobicity of liquid wetted surfaces).

In one embodiment, the inlay is made of or comprises a polymer material, such as PEEK, PEKK, PE, polyimide, and/or a metal material, such as gold, Titanium, SST-alloys (preferably with low yield strength). The material is preferably selected in order to adapt to an opposed surface of the fluidic device without leakage under a certain pressure drop. The inlay may also have a coating, such as gold, a polymer e.g. as a fluoropolymer, allowing covering and/or filling smaller surface roughness when being pressed. In case of a metal type inlay, (i.e. the inlay is comprised of a metal), a metal coating is preferably selected, such as gold. In case of a polymer type inlay, (i.e. the inlay is comprised of a polymer), a polymer coating is preferably selected, such as a fluoropolymer.

In embodiments, the tubing is made of or comprises a metal, stainless steel, titan, plastic, polymer, glass and/or quartz. The tubing may have a lumen having a diameter of less than 0.8 mm, particularly less than 0.2 mm. The tubing may have circular, elliptical, rectangular or any other suitable shape as known in the art and may also show variations in diameter and/or shaping. The tubing may be or comprise a capillary.

In one embodiment, the tubing comprises an inner tubing and an outer tubing. The outer tubing (radially) surrounds the inner tubing. The inner tubing may be comprised of a material different from the outer tubing. The outer tubing may be a socket for adapting to a desired outer diameter for the tubing and/or specific requirements for further tightening elements e.g. ferrules.

When applying such tubings having inner and outer tubings, the inlay can be configured to cover a contact region at an axial end of the tubing resulting where the inner and outer tubings are abutting together. Such contact region occurring at the front side of the tubing may show a gap between the inner and outer tubings or any other kind of surface irregularity and usually requires an extra step of closing such gap and/or surface irregularity. Often, certain surface irregularities still remain which may then lead to cross contamination, for example between different sample runs in HPLC. By designing the inlay to cover the axial end of the contact region, e.g. in that such contact region is within the cavity of the tubings, the inlay can close any surface irregularity and thus reduce or even avoid potential cross contamination.

In case the inner tubing is made of a bio-compatible material, such as a polymer (e.g. PEEK), and the outer tubing may be provided in particular for increasing mechanical strength but may not be bio-compatible at least as required, the inlay can be fixed to the inner tubing to become fluid tight. The cavity which may then also be provided of a bio-compatible material, such as a polymer (e.g. PEEK), and seals the fluid against contacting the outer tubing, so that bio-compatibility of the tubing can be ensured. Fixing of the cavity to the inner tubing can be preferably achieved as aforedescribed, for example by a thermal process in particular by Laser or ultrasonic heating.

In one embodiment the inner tubing is a tube-in-tube arrangement wherein the liquid leading tubing is made of fused silica or glass, and the second tubing covering the fused silica or glass tubing is made of metal or polymeric material.

In one embodiment of the fitting element comprises a further sealing element configured for sealing against a pressure in the fluid part of the tubing. The fitting element thus provides a two-stage sealing with the inlay sealing directly, where the tubing couples to the fluidic device, and the further sealing providing an additional sealing stage in order to securely sealing against a fluid pressure in the fluid path. In other words, the inlay may provide a low(er) pressure sealing at the front side of the tubing, and the further sealing element may provide a high(er) pressure sealing located, for example, at or along a lateral side of the tubing.

It is to be understood that the front side at the connection of the tubing to the fluidic device is often very difficult to seal, as in particular the shape of the counterpart element to the tubing might vary from one fluidic device to another and/or might have surface imperfections. However, contact pressure in particular in axial direction of the tubing might be limited in order to avoid or reduce destruction or deformation of the components involved. With increasing fluid pressure, for example in the range of thousand bar and beyond, conventional fitting systems have been often shown not to be sufficient and may lead to leaking and/or cross contamination. The two-stage sealing, however, may allow that fluid even when "leaking" through the first stage of the inlay is fully sealed at the second stage and is limited from returning back into the fluid path, for example during normal application.

For example in an HPLC application, the front sealing provided by the inlay may allow fluid to pass ("leak") during pressurizing of the system (when the pressure in the system is raised to the desired target pressure). While the further sealing element fully seals so that no fluid can leak through such further sealing element, a interspace between the first and second sealing stages may become filled with fluid. However, as such fluid applied in the pressurizing phase in HPLC is normally only solvent which does not contain any sample, the interspace between the first and second stages will thus be filled only with such (non sample containing) solvent, so that no sample contamination can occur even when fluid contained in the inner space may return back into the fluid path. Further, it is to be understood that system pressure after sample is introduced in HPLC usually changes slowly and within a narrow range compared to the system pressure. so that the fluid in the interspace, is kept within the interspace and "sees" only very low "driving force" to communicate with the fluidic path of the inside of the tubing. Such embodiments thus provide a "chromatographic sealing" at the front side by means of the inlay and a "system pressure sealing" by means of the further sealing element. The term "chromatographic sealing" can be understood as a sealing sufficient during a sample run in an HPLC system, so that carry over (i.e. the sample is temporally trapped and released later), or external band broadening (e.g. sample is guided to a "dead space" where the sample is released only by diffusion) can be avoided or at least limited, preferably while maintaining pressure within a narrow range when sample has been introduced in the HPLC-System.

In one embodiment, the further sealing element comprises a front ferrule, which might be slidable on the tubing (at least before coupling of the tubing to fluidic device). The front ferrule may have a conically tapered front part configured to correspond to a conical portion of a receiving cavity of the fluidic device. Upon coupling of the tubing to the fluidic device, the conically tapered front part presses against the conical portion of the receiving cavity for sealing against the pressure in the fluid path of the tubing.

The further sealing element is preferably configured for sealing a receiving cavity of the fluidic device, when the receiving cavity receives the fitting element upon coupling of the tubing to fluidic device. The inlay is preferably sealing the receiving cavity at the front side of the tubing, and the further sealing element is further sealing the receiving cavity along a (lateral) side of the tubing within the receiving cavity.

Embodiments of the fitting element may further comprise a preload element configured for pressing the front side of the tubing in an axial direction of the tubing against the fluidic device, when the tubing is coupled to the fluidic device. The preload element may exert a spring-loaded and/or spring-biased pressing force on the front side of the tubing and against the fluidic device. The spring element may be configured to promote, upon joining of the tubing the fluidic device, a forward motion of the tubing towards the fluidic device. The fluidic device may provide a stopper to such forward motion so that the inlay is only deformed until reaching of the stopper. Thus, an excessive deformation of the inlay, which may also lead to a narrowing or deformation of the fluid path, can be reduced and controlled.

Embodiments of the fitting element may further comprise a gripping element to promote a grip force to mechanically connect the gripping element with the tubing, when the tubing is coupled to the fluidic device.

Embodiments of the fitting element may further comprise a joined element configured for joining to the fluidic device by a screw connection.

According to embodiments of the present invention, a fitting, configured for coupling a tubing to a fluidic device, comprises a fitting element according to the aforedescribed embodiments. The fitting element comprises the tubing and the inlay located in the cavity of the front side of the tubing. The fluidic device comprises a receiving cavity configured for receiving the fitting element. Upon coupling of the tubing to the fluidic device, at least one of the inlay and the front side of the tubing is pressing to a contact surface within the receiving cavity, and the fluid path of the tubing is connected to the fluid path of the fluidic device.

The terms "fitting" and "fitting element", as used herein, shall both relate to coupling a tubing to a fluidic device. The term "fitting" shall cover all components required for coupling the tubing to the fluidic device, and may even comprise the tubing and/or the fluidic device, or parts thereof. The term "fitting element" shall cover a part of the fitting.

In an embodiment of the fitting, the fitting element comprises a front ferrule, a back ferrule, and a first joint element. The receiving cavity of the fluidic device is configured for accommodating the front ferrule and the tubing and has a second joint element configured to be joinable to the first joint element of the fitting element. The back ferrule is configured in such a manner that - upon joining the first joint element to the second joint element - the back ferrule exerts a spring-biased pressing force against the front ferrule to provide a sealing between the front ferrule and the receiving cavity. Further upon joining the first and second joined elements, the back ferrule exerts a grip force on the tubing.

In such embodiment, the front ferrule, the back ferrule, and the first joint element may be configured slidable on the tubing, at least before the tubing is coupled to the fluidic device. The back ferrule may comprise a multiple spring configuration preferably comprising to disc springs separated by a flat spring. The first joined element may have a slanted front face, configured for exerting a bending moment on annular back spring of the back ferrule. The receiving cavity may be configured for accommodating the back ferrule and a part of the first joining element. The fitting element may comprise an additional spring element arranged slidable on the tubing between the back ferrule and first joining element to transmit a force exerted by the first joint element to back ferrule.

Any of the further sealing element, the gripping element, the front ferrule, the back ferrule, spring elements, and the joint element may be embodied as disclosed by the documents cited in the introductory part of the description and in particular in the aforementioned International application PCT/EP2008/058639.

The term "fluidic device" as used herein may cover or refer to a tubing or an apparatus such as an HPLC device, a fluid separation device, a fluid handling device, and/or a measurement device in general. Accordingly, embodiments of the invention cover couplings between individual tubings as well as couplings between a tubing and a device/apparatus.

The fluidic device may comprise a processing element configured for interacting with a sample fluid. The fluidic device may be configured to conduct a sample fluid through the fluidic device, a fluid separation system for separating compounds of a sample fluid, a fluid purification system for purifying a sample fluid, and/or to analyze at least one physical, chemical and/or biological parameter of at least one compound of a sample fluid.

An embodiment of the present invention comprises a fitting configured for coupling a tubing to a fluidic device. The fitting comprises a fitting element as described above, having the tubing, a first sealing element, and a second sealing element. The fluidic device comprises a receiving cavity configured for receiving the fitting element. Upon coupling of the tubing to the fluidic device, the first sealing element provides a first sealing stage at a front side of the tubing where the tubing is pressing to a contact surface within the receiving cavity. The second sealing element provides a second sealing stage for sealing the receiving cavity along a side of the tubing within the receiving cavity. Such fitting provides a two-stage sealing as aforediscussed, and may thus provide a chromatographic sealing by the first sealing element at the front side of the tubing and a system sealing by the second sealing stage. The second sealing stage thus seals an interspace between the first and second sealing stages.

An embodiment of the present invention comprises a fluid separation system configured for separating compounds of a sample fluid in a mobile phase. The fluid separation system comprises a mobile phase drive, such as a pumping system, configured to drive the mobile phase through the fluid separation system. A separation unit, which can be a chromatographic column, is provided for separating compounds of the sample fluid in the mobile phase. The fluid separation system further comprises a fitting element and/or fitting as disclosed in any of the aforementioned embodiments for coupling a tubing (provided the conducting the mobile phase) to a fluidic device in such fluid separation system. The fluid separation system may further comprise a sample injector configured to introduce the sample fluid into the mobile phase, a detector configured to detect separated compounds of the sample fluid, a collector configured to collect separated compounds of the sample fluid, a data processing unit configured to process data received from the fluid separation system, and/or a degassing apparatus for degassing the mobile phase. The fluidic device to which the tubing is or can be coupled can be any of such devices, and plural of such fittings or fitting elements may be used within such fluid separation system.

Embodiments of the present invention might be embodied based on most conventionally available HPLC systems, such as the Agilent 1290 Series Infinity system, Agilent 1200 Series Rapid Resolution LC system, or the Agilent 1100 HPLC series (all provided by the applicant Agilent Technologies - see www.agilent.com).

One embodiment comprises a pumping apparatus having a piston for reciprocation in a pump working chamber to compress liquid in the pump working chamber to a high pressure at which compressibility of the liquid becomes noticeable.

One embodiment comprises two pumping apparatuses coupled either in a serial or parallel manner. In the serial manner, as disclosed in EP 309596 A1, an outlet of the first pumping apparatus is coupled to an inlet of the second pumping apparatus, and an outlet of the second pumping apparatus provides an outlet of the pump. In the parallel manner, an inlet of the first pumping apparatus is coupled to an inlet of the second pumping apparatus, and an outlet of the first pumping apparatus is coupled to an outlet of the second pumping apparatus, thus providing an outlet of the pump. In either case, a liquid outlet of the first pumping apparatus is phase shifted, preferably essentially 180 degrees, with respect to a liquid outlet of the second pumping apparatus, so that only one pumping apparatus is supplying into the system while the other is intaking liquid (e.g. from the supply), thus allowing to provide a continuous flow at the output. However, it is clear that also both pumping apparatuses might be operated in parallel (i.e. concurrently), at least during certain transitional phases e.g. to provide a smooth(er) transition of the pumping cycles between the pumping apparatuses. The phase shifting might be varied in order to compensate pulsation in the flow of liquid as resulting from the compressibility of the liquid. It is also known to use three piston pumps having about 120 degrees phase shift.

The separating device preferably comprises a chromatographic column providing the stationary phase. The column might be a glass or steel tube (e.g. with a diameter from 50 µm to 5 mm and a length of 1 cm to 1 m) or a microfluidic column (as disclosed e.g. in EP 1577012 or the Agilent 1200 Series HPLC-Chip/MS System provided by the applicant Agilent Technologies, see e.g. http://www.chem.agilent.com/Scripts/PDS.asp?IPage=38308). For example, a slurry can be prepared with a powder of the stationary phase and then poured and pressed into the column. The individual components are retained by the stationary phase differently and separate from each other while they are propagating at different speeds through the column with the eluent. At the end of the column they elute one at a time. During the entire chromatography process the eluent might be also collected in a series of fractions. The stationary phase or adsorbent in column chromatography usually is a solid material. The most common stationary phase for column chromatography is silica gel, followed by alumina. Cellulose powder has often been used in the past. Also possible are ion exchange chromatography, reversed-phase chromatography (RP), affinity chromatography or expanded bed adsorption (EBA). The stationary phases are usually finely ground powders or gels and/or are microporous for an increased surface, though in EBA a fluidized bed is used.

The mobile phase (or eluent) can be either a pure solvent or a mixture of different solvents. It can be chosen e.g. to minimize the retention of the compounds of interest and/or the amount of mobile phase to run the chromatography. The mobile phase can also been chosen so that the different compounds can be separated effectively. The mobile phase might comprise an organic solvent like e.g. methanol or acetonitrile, often diluted with water. For gradient operation water and organic is delivered in separate bottles, from which the gradient pump delivers a programmed blend to the system. Other commonly used solvents may be isopropanol, THF, hexane, ethanol and/or any combination thereof or any combination of these with aforementioned solvents.

The sample fluid might comprise any type of process liquid, natural sample like juice, body fluids like plasma or it may be the result of a reaction like from a fermentation broth.

The fluid is preferably a liquid but may also be or comprise a gas and/or a supercritical fluid (as e.g. used in supercritical fluid chromatography - SFC - as disclosed e.g. in US 4,982,597 A).

The pressure in the mobile phase might range from 2-200 MPa (20 to 2000 bar), in particular 10-150 MPa (100 to 1500 bar), and more particular 50-120 MPa (500 to 1200 bar).

The HPLC system might further comprise a sampling unit for introducing the sample fluid into the mobile phase stream, a detector for detecting separated compounds of the sample fluid, a fractionating unit for outputting separated compounds of the sample fluid, or any combination thereof. Further details of HPLC system are disclosed with respect to the aforementioned Agilent HPLC series, provided by the applicant Agilent Technologies, under www.agilent.com.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied in or by the control unit.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s). The illustration in the drawing is schematically.
Fig. 1 shows in schematic view a liquid separation system 10, in accordance with embodiments of the present invention, e.g. used in high performance liquid chromatography (HPLC).
Fig. 2 illustrates a cross-sectional view of a fitting 100 according to an exemplary embodiment.
Fig. 3 illustrates a three-dimensional view of a front ferrule and back ferrule arrangement of the fitting of Fig. 2.
Fig. 4 illustrates a cross-sectional view of another embodiment of the fitting 100.
Figs. 5A and 5B show in cross-sectional view and in greater detail the front portion of the tubing 102 bearing the inlay 210.
Fig. 6 shows a three dimensional view of the fitting 100 corresponding to the embodiment of Fig. 4.
Fig. 7 shows in greater detail the front portion of the tubing 102 in a three-dimensional view.

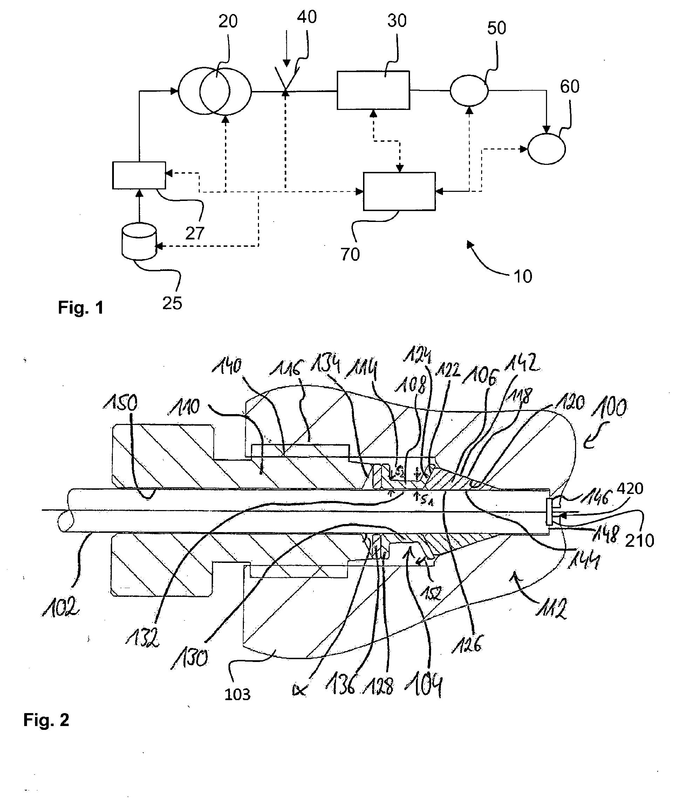

Referring now in greater detail to the drawings, Fig. 1 depicts a general schematic of a liquid separation system 10. A pump 20 receives a mobile phase from a solvent supply 25, typically via a degasser 27, which degases and thus reduces the amount of dissolved gases in the mobile phase. The pump 20 - as a mobile phase drive - drives the mobile phase through a separating device 30 (such as a chromatographic column) comprising a stationary phase. A sampling unit 40 can be provided between the pump 20 and the separating device 30 in order to subject or add (often referred to as sample introduction) a sample fluid into the mobile phase. The stationary phase of the separating device 30 is configured for separating compounds of the sample liquid. A detector 50 is provided for detecting separated compounds of the sample fluid. A fractionating unit 60 can be provided for outputting separated compounds of sample fluid.

While the mobile phase can be comprised of one solvent only, it may also be mixed from plural solvents. Such mixing might be a low pressure mixing and provided upstream of the pump 20, so that the pump 20 already receives and pumps the mixed solvents as the mobile phase. Alternatively, the pump 20 might be comprised of plural individual pumping units, with plural of the pumping units each receiving and pumping a different solvent or mixture, so that the mixing of the mobile phase (as received by the separating device 30) occurs at high pressure und downstream of the pump 20 (or as part thereof). The composition (mixture) of the mobile phase may be kept constant over time, the so called isocratic mode, or varied over time, the so called gradient mode.

A data processing unit 70, which can be a conventional PC or workstation, might be coupled (as indicated by the dotted arrows) to one or more of the devices in the liquid separation system 10 in order to receive information and/or control operation. For example, the data processing unit 70 might control operation of the pump 20 (e.g. setting control parameters) and receive therefrom information regarding the actual working conditions (such as output pressure, flow rate, etc. at an outlet of the pump). The data processing unit 70 might also control operation of the solvent supply 25 (e.g. setting the solvent/s or solvent mixture to be supplied) and/or the degasser 27 (e.g. setting control parameters such as vacuum level) and might receive therefrom information regarding the actual working conditions (such as solvent composition supplied over time, flow rate, vacuum level, etc.). The data processing unit 70 might further control operation of the sampling unit 40 (e.g. controlling sample injection or synchronization sample injection with operating conditions of the pump 20). The separating device 30 might also be controlled by the data processing unit 70 (e.g. selecting a specific flow path or column, setting operation temperature, etc.), and send-in return - information (e.g. operating conditions) to the data processing unit 70. Accordingly, the detector 50 might be controlled by the data processing unit 70 (e.g. with respect to spectral or wavelength settings, setting time constants, start/stop data acquisition), and send information (e.g. about the detected sample compounds) to the data processing unit 70. The data processing unit 70 might also control operation of the fractionating unit 60 (e.g. in conjunction with data received from the detector 50) and provides data back.

For transporting liquid within the liquid separation system 10, typically tubings (e.g. tubular capillaries) are used as conduits for conducting the liquid. Fittings are commonly used to couple plural tubings with each other or for coupling a tubing to any device. For example, fittings can be used to connect respective tubings to an inlet and an outlet of the chromatographic column 30 in a liquid-sealed fashion. Any of the components in the fluid path (solid line) in Fig. 1 may be connected by tubings using fittings. While the fluid path after the column 30 is usually at low pressure, e.g. 50 bar or below, the fluid path from the pump 20 to the inlet of the column 30 is under high pressure, currently up to 1200 bar, thus posing high requirements to fluid tight connections.

**Fig. 2** shows an embodiment of a high pressure fitting 100 for coupling a tubing 102 (having a (not shown) inner fluid channel for conducting liquid, e.g. the mobile phase with or without a sample fluid) to another fluidic device 103, such as chromatographic column 30 of Fig. 1. In the schematic view of Fig. 2, only the portion of the device 103 which is relevant for the coupling with the tubing 102 is depicted.

The fitting 100 comprises a male piece 104 having a front ferrule 106 (e.g. made of a polymer material) and having a back ferrule 108 (e.g. made of a metallic material). The front ferrule 106 and the back ferrule 108 are integrally formed and are slidable together over the tubing 102 (which might have a metal outer tubing or socket as shown later in greater detail). Moreover, the male piece 104 has a first joint element 110 configured slidably on the tubing 102. Thus, for mounting the fitting 100 on the tubing 102, the integrally formed front ferrule-back ferrule configuration 106, 108 is slid over the tubing 102, and subsequently the first joint element 110 is slid on the tubing 102. The front ferrule 106, the back ferrule 108 and the first joint element 110 together constitute the male piece 104.

After having slid the male piece 104 over the tubing 102, a female piece 112 having a receiving cavity 114 (e.g. a recess) may be slid over the tubing 102 from the right-hand side to the left-hand side of Fig. 2. The female piece 112 has the receiving cavity 114 configured for accommodating the front ferrule 106, the back ferrule 108, a part of the first joint element 110, and the tubing 102, and has a second joint element 116 configured to be joinable to the first joint element 110. The first and the second joint elements 110, 116 may be fastened to one another by a screw connection, as will be explained below in more detail.

A lumen 126 of the front ferrule 106 is dimensioned for accommodating the tubing 102 with clearance. A lumen 132 of the back ferrule 108 is dimensioned for accommodating the tubing 102 with clearance. The first joint element 110 also has a lumen 150 configured for accommodating the tubing 102 with clearance.

The back ferrule 108 is configured such that upon joining the first joint element 110 to the second joint element 116, the back ferrule 108 exerts a pressing force on the front ferrule 106 to provide a sealing between the front ferrule 106 and the female piece 112. Simultaneously, such joining has the consequence that the back ferrule 108 exerts a grip force between the male piece 104 and the tubing 102, and that the front ferrule 106 is sealed against the tubing 102 to prevent any fluid leakage. The pressing force has a direction which is longitudinal (parallel to an extension of the tubing 102), whereas the grip force has a direction which is perpendicular to the extension of the tubing 102. As the grip force, the back ferrule 108 generates a positive locking force between the male piece 104 and the tubing 102. This prevents the tubing 102 from laterally sliding after having fixed the two joint elements 110, 116 to one another.

As can be taken from Fig. 2, the front ferrule 106 has a conically tapered front part 118 shaped and dimensioned to correspond to a conical portion 120 of the receiving cavity 114 of the female piece 112. Thus, a form closure between the conical front part of the receiving cavity 114 on the one hand and the conically tapered front part 118 of the front ferrule 106 may be achieved. Moreover, the front ferrule 106 has a conically tapered back part 122 (which may also be arranged vertically or upright) shaped and dimensioned to correspond to a slanted annular front spring 124 of the back ferrule 108. Although the shapes of the two components 122, 124 are adjusted to match to one another, it is nevertheless possible that upon exertion of corresponding forces, the slanted annular front spring 124 is bent. The slanted annular front spring 124 is adapted for being bent, upon joining the first joint element 110 to the second joint element 116, into an upright position (see arrow 152) to promote a forward motion of the front ferrule 106 towards a stopper portion 118 of the receiving cavity 114 of the female piece 112.

An annular back spring 128 is provided as part of the ferrule 108 which is adapted to promote, upon joining the first joint element 110 to the second joint element 116, a forward motion of the tubing 102 towards a stopper portion 148 of the receiving cavity 114 of the female piece 112 providing a spring-loading fore.

Between the annular back spring 128 and the slanted annular front spring 124 (two disk springs), a sleeve element 130 (a flat spring) is arranged. The sleeve element 130 is conically tapered and has a thicker portion facing the first joint element 110 and has a thinner portion facing the front ferrule 106. A thickness s₁ of the thinner portion is smaller than a thickness s₂ of the thicker portion. These different thickness values allow the sleeve element 130 to improve the force distribution in a longitudinal direction of Fig. 2.

The first joint element 110 is configured for being joined to the second joint element 116 by a screw connection. Thus, in a portion 140, an internal thread of the female piece 112 can be screwed into an external thread in the first joint element 110 of the male piece 104. A user simply has to fasten this screwing connection, and thereby automatically seals the front ferrule 106 against the female element 112 and exerts a grip between the back ferrule 108 and the tubing 102.

A slanted surface 134 of the first joint element 110 is configured for exerting a bending moment onto the annular back spring 128 of the back ferrule 108. The slanted surface 134 includes an acute angle α=60° with an outer surface of the tubing 102. With such an acute angle 0<α<90°, a desired bending of the spring components 128, 130 of the back ferrule 108 and of an optional additional spring 136 may be effected. As an alternative to the described configuration, it is possible to that the back spring 128 is slanted and the front spring 124 is upright, or that both the back spring 128 and the front spring 124 are slanted in a way that both of them include an acute angle with the sleeve element 130.

A force transmitting annular metal ring 136 (which supports additional force to the front ferrule 106 without increasing radial grip on tubing 102) is arranged slidable on the tubing 102 between the back ferrule 108 and the first joint element 110, and transmits a force exerted by the first joint element 110 to the back ferrule 108. The force transmission element 136 operates as a disk washer and is provided as a separate element which is not integrally formed with a front ferrule 106 and a back ferrule 108. The additional metal ring 136 may be added to increase the sealing force and the elastic deformation independent of the supplied gripping force.

Fig. 2 shows a non-biased state of the fitting 100. In a sealed configuration, a first seal connection is achieved in a region 142 between the front ferrule 106 and the female part 112, and a second sealing is achieved in a region 144 between the front ferrule 106 and the tubing 102. In a front side (or frontal area) 146 of the tubing 102, is optionally possible to provide a polymeric coating in order to further suppress sample contamination, since this measure may further increase the sealing performance between the front side 146 and the stopper portion 148.

In the following, the force transmission will be explained: After having slid the front ferrule 106 and the back ferrule 108 on the tubing 102 and after having slid the first joint element 110 onto the tubing 102, the first joint element 110 may be connected by screwing with the second joint element 116. This converts the back ferrule 108 into a biased state so that grip is generated between the tubing 102 and the back ferrule 108. As the grip force increases the force longitudinal to the capillary axis increases analog and supplies pressure to the sealing regions 146, 148. A corresponding force transmission further results in an upward pivoting of the front spring 124 of the back ferrule 108, as indicated by arrow 152. This presses the polymer material of the front ferrule 106 to a frontward position, i.e. towards the right-hand side of Fig. 2 and supplies pressure to the sealing regions 142, 144.

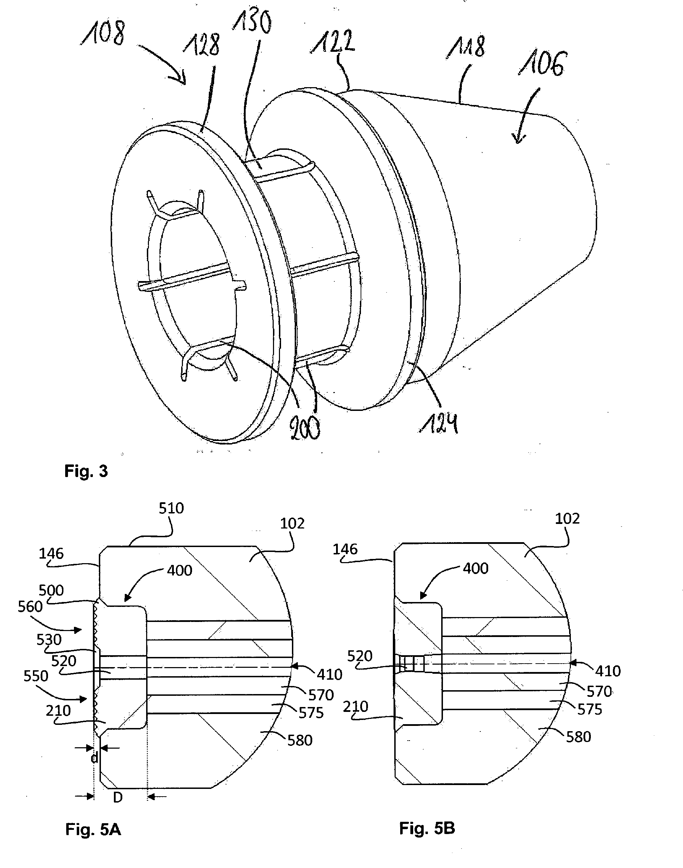

As can be taken from the three-dimensional view of Fig. 3, the sleeve portion 130 of the back ferrule 108 comprises a plurality of circumferentially equally distributed slits 200. These slits or grooves 200 allow the sleeve diameter to shrink and to grip to the tubing 102.

Fig. 2 and Fig. 3 show a high pressure ferrule configuration 100 for providing a sealed flow connection between an open ended duct 146 of the tubing 102 or sleeve (for instance enclose fused silica tubing) and a base element is provided, designed for pressure rating beyond 1.000 bar with long-term firmness at an operation temperature above 100 °C.

A component of such a fitting 100 is a detachable fixing element (for instance a fitting screw realized as a screwing connection between the joint elements 110 and 116 of Fig. 2).

A ferrule assembly 106, 108 is provided which comprises a (e.g. polymer typed) sealing (front ferrule 106) and a (e.g. metal typed) elastic gripper element (back ferrule 108). This may provide both an unlockable radial grip and a spring biased force against the front ferrule 106 as well as the fixing element when locked. The actual sealing force needed is divided and adjusted for:
- a spring biased force to deform and seal the front ferrule 106 and supporting force for creep under compression;
- a spring biased force to press the tube 102 against the base element;

In the following, some advantageous properties of the ferrule configuration 106, 108 will be mentioned:
- ferrule 106, 108 position axial repeatable-adjustable on tubing 102;
- material of the front ferrule 106 may be polymer (for instance PEEK);
- material for the back ferrule 108 may be stainless steel with high elastic elongation;
- the system may have an ability for an elastic radial grip on the tubing 102;
- spring biased element 124, 128 for the sealing force;
- spring biased element 128, 136 for pushing the tube 102 against the base element 116 (for instance union);
- sticking on tubing 102 as pre-fixation or to support for captivity of the fitting;
- one piece handling is possible which is simple for a user;
- exchangeable configuration;
- low axial extension;

The embodiment of Fig. 2, Fig. 3 provide for three simultaneously activatable spring sections 124, 128, 130 on the back ferrule 108:
- a first disk spring 124 is provided opposite to the front ferrule 106;
- a flat second disk spring 128 is provided opposite to the fixing element 110;
- a concentrically arranged flat spring series 130 is provided in the middle section between disk springs 124, 128.

As can be taken from Fig. 3, two or more separating slots 200 may be formed in the middle section 130, for instance arranged in a radial symmetric manner. A longitudinally reinforced middle section 130 may be effective from the first disk spring 124 to the second disk spring 128. A structured surface for the middle section 130 (see reference numeral 200) in opposite to the tubing may be provided to increase the friction force or even build a form closure at the region touching the tubing 102, causing an enhanced grip to the tubing 102. Such a structured surface may be realized with a defined spatial surface roughness, the provision of concentric multiple grooves (respectively rips), a helix groove (respectively a helix rip), a helix groove (respectively a helix rip) with half of the flank lead of the fitting element when screwed. Other configurations of the structured surface are a special coating optionally in combination with one or more of the above provisions. Also a surface hardening may be provided optionally in combination with one or more of the above provisions.

The fixing element 110 may be provided with a conical shape opposite to the flat second disk spring 128. A compression lip may be attached to the front ferrule 106 supporting a defined sliding and clamping along the tube 102. A second disk spring may be arranged in parallel.

While the embodiment of Figs. 2 and 3 have been illustrated above in great detail, it is to be understood that the invention is not limited to such embodiments and that other fitting types can be used accordingly. This will also become apparent from the following.

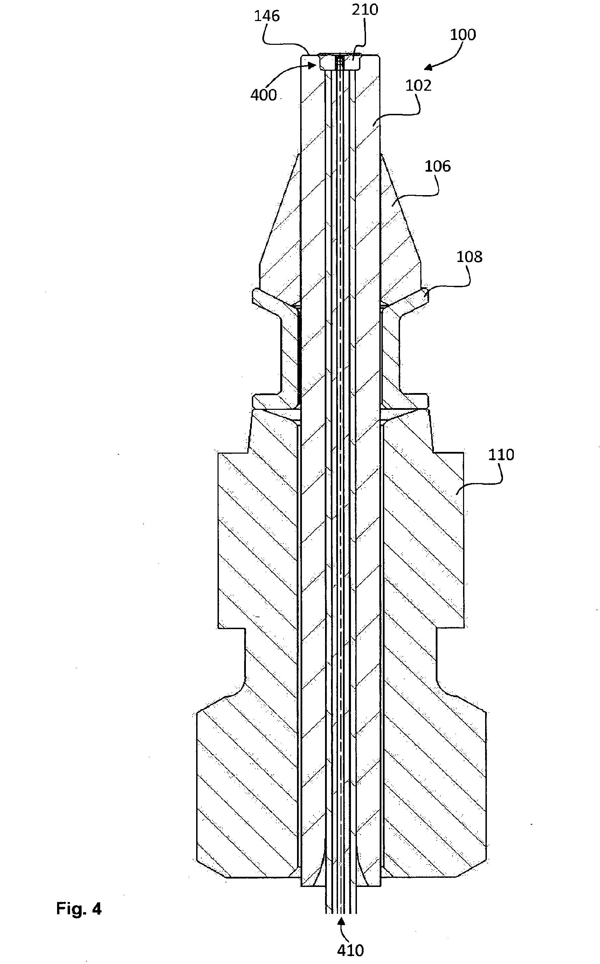

Turning again to Fig. 2, the tubing 102 bears an inlay 210 in its front side 146, which can be seen in greater detail in Fig. 4 shall be explained further.

**Fig. 4** illustrates another embodiment of the fitting 100 and substantially corresponds in function the embodiment of Fig. 2. The inlay 210 is located in a cavity 400 of the front side 146 of the tubing 102. As indicated in Fig. 4 and which can be better seen in Fig. 5A, the inlay 210 protrudes over the front side 146, at least before the tubing 102 is coupled to the fluidic device 103. When coupling the tubing 102 to the fluidic device 103, as shown in Fig. 2, the front side 146 is fitted to the fluidic device 103, so that a fluid path 410 (see Fig. 4) of the tubing 102 becomes connected to a fluid path 420 (see Fig. 2) of the fluidic device 103. When the tubing 102 is coupled to the fluidic device, the inlay 210 provides a sealing to the fluid paths 410, 420 of the tubing 102 and the fluidic device 103.

**Figs. 5A and 5B** show in greater detail the front portion of the tubing 102 bearing the inlay 210. While Fig. 5A shows a state before coupling the tubing 102 to the fluidic device 103, Fig. 5B illustrates a state during or after coupling of the tubing 102 to the fluidic device 103 resulting in a deformation of the inlay 210.

The inlay 210 in Fig. 5A protrudes over the front side 146 by a small distance d, which maybe about 0.01-0.2mm.. The (axial) height D of the inlay 210 may about 0.1-1 mm. The cavity 400 is situated in the center of the front side 146 of the tubing 102, and the inlay 210 is formed into and fills out substantially the entirety of the cavity 400. In the embodiment of Fig. 5A, the inlay 210 is form-fit into the cavity 400 by application of a thermoforming, such as Laser heating or remelting of a preformed inlay into the cavity to the required final form by ultrasonic power or hot embossing, or the inlay is completely injection molded

The inlay 210 may laterally extend (in radial direction) over the cavity 400 by a portion 500 which might further extend over the front side 146. In the embodiment of Figs. 5A and 5B, the cavity 400 has a small conical portion towards the front side 146, and the portion 500 of the inlay 210 is substantially limited to such conical region. However, the portion 500 may also extend further over the front side 146. By limiting the portion 500 not to reach over the front side 146 and onto a lateral side 510 of the tubing 102, it can be ensured that no material from the inlay 210 will flow to such lateral side 510, which may otherwise block the tubing 102 from removing from the fluidic device 103 (not shown in Figs. 5A and 5B). It is clear that extension of portion 500 along the front side of the tubing may reduce the stopper functionality, and the overload protection of tubing 102 and depends on the material combination of inlay 210 and tubing 102 as well as the pressure applied thereto.

As can be seen from Fig. 5B, the inlay 210 has been fully compressed within the cavity 400 during coupling of the tubing 102 to fluidic device 103. In this embodiment, the inlay 210 is made of a polymeric material such as PEEK, while the front side 146 of the tubing 102 is of a harder material, such as stainless steel (SST). Accordingly, the front side 146 represents a stopper for a forward motion of the tubing 102 when coupling the tubing 102 to fluidic device 103. This limits the amount of compression of the inlay 210, and can also ensure that a fluid path 520 of the inlay 210 will only be deformed to a certain extend as indicated in Fig. 5B. It is clear that any limitation or constriction of the flow path diameter should be reduced to a minimum in order to prevent pressure rising and flow disturbance.. The inlay in cavity design allows the system pressure to stabilize the inner shape of the liquid wetted inlay and helps to increase the sealing pressure. The flow path 520 of the inlay 210 may also have an extended portion 530 towards the fluidic device 103 in order to reduce constriction of the flow path. Adequate selection of the material of the inlay 210 and shaping in particular of the flow path 520 may allow reducing such constriction to a minimum.

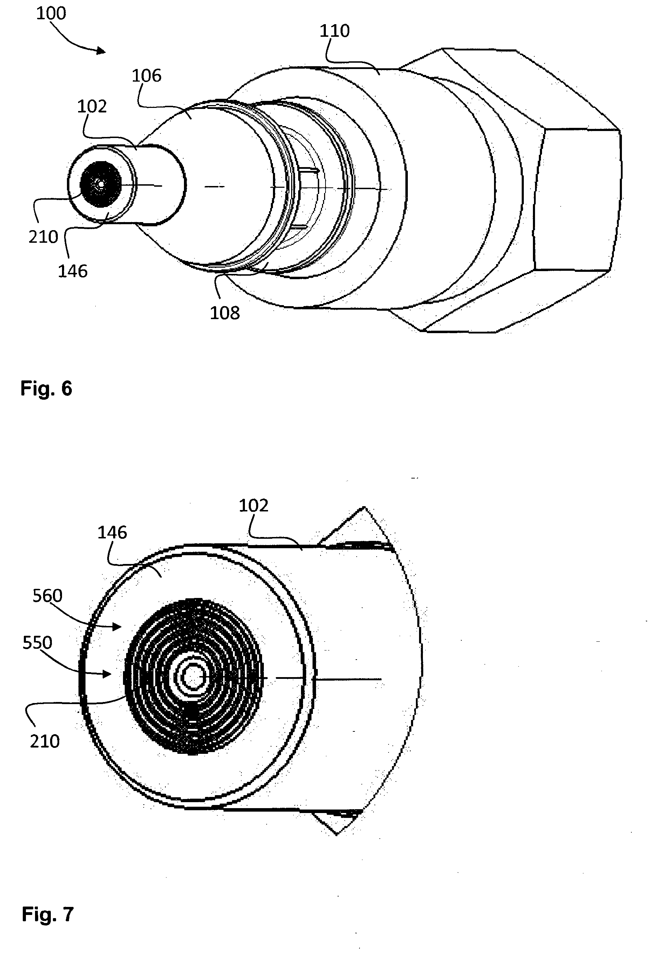

**Fig. 6** shows a three dimensional view of the fitting 100 corresponding to the embodiment of Fig. 4.

**Fig. 7** shows in greater detail the front portion of the tubing 102 of Fig. 6 with its front side 146 bearing the inlay 210 within the cavity 400 (se Figs. 4 and 5). The embodiment of Fig. 7 has an outer surface 550 having a structure 560, as can also be seen in the cross sectional view of Fig. 5A. The structure 560 is designed for increasing surface pressure between the inlay 210 and the fluidic device 103. In the embodiment of Figs. 5A and 7, the structure 560 is provided by concentric indentations and/or protrusions. The outer surface 550 may further be coated with a relatively soft material, such as gold, for balancing small imperfections or surface roughness of the contact surface provided by the fluidic device 103.

Turning again to Figs. 5A and 5B (as also seen in Fig. 4), the tubing 102 in this embodiment has an inner tubing 570 and outer tubing 575 surrounding the inner tubing 570. Further, a socket 580 is surrounding the outer tubing 575. While the inner tubing 570, outer tubing 575, and socket 580 are also shown in Fig. 4, reference numerals are omitted in Fig. 4. Short rigid capillaries 102 (e.g. e.g. 1/16 inch), as seen in Fig. 4, may also be referred to as socket 580.

In order to provide bio-compatibility e.g. as required in many HPLC applications, the inner tubing 570 shall be made of a polymer material, preferably PEEK. The outer tubing 575, also referred to as tubing liner, shall be provided for increasing mechanical strength and/or stability, and shall be made in this embodiment by a metal such as stainless steel (SST) or nickel (Ni). As an alternative, bio-compatible solution, the inner tubing 570 might be of fused silica with the outer tubing is made of a polymeric material, such as PEEK, for resiliently allowing to couple the fused silica inner tubing 570 even under high pressure and to supply a general guard for the brittle fused silica tubing. The tubing socket 580 may be provided for adaption to a 1/16 inch fitting system, as often used in HPLC applications, and might be of a metal such as SST. Further on the fused silica tubing 570 which in the majority of cases are coated with a thin layer of polyimide may have a metallic outer tubing 575 e.g. galvanic formed nickel tubing. This type of tubing composite can easily fixed to the socket 580 by laser welding where the e.g. nickel front side of the outer tubing 575 is covered by the inlay 210.

In order to maintain bio-compatibility even when using less bio-compatible materials, such as metal, e.g. for the outer tubing 575 and/or the socket 580, the inlay 210, which shall also be made of a bio-compatible material such as a polymer and preferably PEEK, is fixedly connected with the inner tubing 570, preferably by applying ultrasonic heating, thus leading to an integral material transition between the inlay 210 and the inner tubing 570. Accordingly, the outer tubing 575 becomes sealed, and contact of fluid from within the flow path 410 to the outer tubing 575 is avoided. The sealing property of the inlay 210 may further avoid contact of the fluid from within the flow path 410 with the material of the socket 580. While the sealing provided by the inlay 210 at the front side 146 may be sufficient in certain applications, it may not be sufficient in particular for high pressure applications, for example when applying fluid pressure within the flow path 410 e.g. in the range of 100-1500 bar dependent on the materials used in the components connecting at the front side of the fitting. In such case a further sealing may be required, which can be achieved by the front ferrule 106, as depicted in Figs. 2-4. As can be best seen in Fig. 2, the back ferrule 108 presses, upon coupling of the tubing 102 to the fluidic device 103 - against the region 148. This closes and seals an interspace around the front portion of the tubing 102 extending from the front side 146 over the lateral side 510 (see Fig. 5A) until the region where the front ferrule 106 seals against the region 142 (see Fig. 2). However, having a two-stage sealing also provides an additional design parameter in balancing adapting to the geometry of the contacting areas and a degree of deformation in particular of the flow path (as a result from applying a high contact pressure). For example, the first stage at the front side 146 might be purposely designed to seal against a lower pressure only for the benefit of limiting deformation and thus constriction in the flow path.

During pressurization of the flow path 410, when increasing fluid pressure to a target system pressure, liquid might leak through the primary sealing stage provided by the inlay 210 into the interspace. By designing the secondary sealing stage provided by the front ferrule 106 to fully seal against the maximum pressure within the flow path 410, liquid may fill the interspace until the pressure difference between the system pressure and the pressure within the interspace reaches the sealing pressure capability of the primary sealing. Since the primary sealing can be optimized to the capability for the optimal pressure difference, the secondary sealing can be optimized to the system pressure required. The split in two functional or cascaded pressures drops as achieved by a primary and a secondary sealing e.g. allows the primary sealing design to be kept unmodified while the system pressure requirements can be solved within the secondary sealing.

## Claims

1. A fitting element (100) configured for providing a fluidic coupling to a fluidic device (103), the fitting element (100) comprising
a tubing (102), and
an inlay (210) located in a cavity (400) of a front side (146) of the tubing (102),
wherein the inlay (210) protrudes over the front side (146), at least before coupling of the tubing (102) to the fluidic device (103),
- upon coupling of the tubing (102) to the fluidic device (103) - the front side (146) is fitted to the fluidic device (103) for connecting a fluid path (410) of the tubing (102) to a fluid path (420) of the fluidic device (103), and the inlay (210) provides a sealing of the fluid path (410, 420) of the tubing (102) and the fluidic device (103), and
the cavity (400) is located in a center position of the front side (146) of the tubing (102) and opening into the flow path of the tubing (102).

2. The fitting element (100) of claim 1, comprising at least one of:
the inlay (210) is at least one of: formed, form-fit, press-fit, and fixedly coupled into the cavity (400);
the inlay (210) is fixed into the cavity (400) by at least one of direct molding process, a welding process, a gluing process, a thermal process, such as thermoforming, recasting, remelting, partial heating, Laser heating, ultrasonic heating.

3. The fitting element (100) of claim 1 or 2, comprising at least one of:
the inlay (210) is laterally extending over the cavity (400) onto the front side (146) of the tubing (102);
the inlay (210) is laterally extending over the cavity (400) but limited to at least a
portion of the front side (146) of the tubing (102);
the inlay (210) is laterally extending over the cavity (400) but limited to the front side (146) of the tubing (102), so that - upon coupling of the tubing (102) to the fluidic device (103) - the front side (146) represents a stopper for a forward motion of the tubing (102);
upon coupling of the tubing (102) to the fluidic device (103), the front side (146) presses to a contact side of the fluidic device (103) for coupling the fluid path of the tubing (102) to the fluid path of the fluidic device (103);
the inlay (210) comprises a flow path, wherein - upon coupling of the tubing (102) to the fluidic device (103) - the flow path of the inlay (210) is coupled between the fluid path of the tubing (102) and the fluid path of the fluidic device (103).

4. The fitting element (100) of claim 1 or any of the above claims, comprising at least one of:
the inlay (210) comprises an outer surface (550), wherein the outer surface is facing the fluidic device (103) upon coupling, and the outer surface comprises a structure (560) configured for increasing a surface pressure between the inlay (210) and the fluidic device (103).

5. The fitting element (100) of the preceding claim, wherein the structure (560) comprises at least one of:
one or more indentations;
one or more concentric indentations;
one or more protrusions;
one or more concentric protrusions:
one or more micro-cavities for further acceptance of sealing components or impregnation;
one or more inclusions for further acceptance of sealing components or impregnation.

6. The fitting element (100) of claim 1 or any of the above claims, comprising at least one of:
the inlay (210) is made of or comprises a polymer material, preferably at least one of PEEK, PEKK, PE and polyimide;
the inlay (210) is made of or comprises a metal material, preferably at least one of gold, Titanium, an SST-alloy;
the tubing (102) is made of or comprises at least one of a group consisting of a metal, stainless steel, titan, a plastic, a polymer, glass, and quartz;
the tubing (102) has a lumen having a diameter of less than 0.8 mm, particularly of less than 0.2 mm;
the tubing (102) has one of a circular, elliptical, or rectangular shape;
the tubing (102) is or comprises a capillary;
the tubing (102) comprises an inner tubing (102) and an outer tubing (102), the outer tubing (102) surrounding the inner tubing (570);
the tubing (102) comprises an inner tubing (570) and an outer tubing (575), the outer tubing (575) surrounding the inner tubing (570), the inner tubing (570) being comprised of a different material than the outer tubing (575);
a socket (580) surrounding the tubing (102);
the tubing (102) comprises an inner tubing (570) and an outer tubing (575), the inner tubing (570) being comprised of a polymer material, the inlay (210) is made of or comprises a polymer material, preferably at least one of PEEK and polyimide, and the inlay (210) seals the inner tubing (570) to avoid any fluid entering the outer tubing (575).

7. The fitting element (100) of claim 1 or any of the above claims, comprising:
a further sealing element configured for sealing against a pressure in the fluid path of the tubing (102).

8. The fitting element (100) of the preceding claim, comprising at least one of:
the further sealing element comprises a front ferrule;
the further sealing element comprises a front ferrule, wherein the front ferrule is slidable on the tubing (102) at least before coupling of the tubing (102) to the fluidic device (103);
the further sealing element comprises a front ferrule having a conically tapered front part configured to correspond to a conical portion of a receiving cavity of the fluidic device (103), wherein upon coupling of the tubing (102) to the fluidic device (103) the conically tapered front part press against the conical portion of the receiving cavity for sealing against the pressure in the fluid path of the tubing (102);
the further sealing element is configured for sealing a receiving cavity of the fluidic device (103), when the receiving cavity receives the fitting element (100) upon coupling of the tubing (102) to the fluidic device (103);
the further sealing element is configured for sealing a receiving cavity of the fluidic device (103), when the receiving cavity receives the fitting element (100) upon coupling of the tubing (102) to the fluidic device (103), wherein the inlay (210) is sealing the receiving cavity at the front side (146) of the tubing (102), and the further sealing element is further sealing the receiving cavity along a side of the tubing (102) within the receiving cavity.

9. The fitting element (100) of claim 1 or any of the above claims, comprising
a preload element configured for pressing - upon coupling of the tubing (102) to the fluidic device (103) - the front side (146) of the tubing (102) in an axial direction of the tubing (102) against the fluidic device (103).

10. The fitting element (100) of the preceding claim, comprising at least one of:
the preload element exerts at least one of a spring-loaded and spring-biased pressing force on the front side (146) of the tubing (102);
a spring element configured to promote, upon joining of the tubing (102) and the fluidic device (103), a forward motion of the tubing (102) towards the fluidic device (103);
a spring element configured to promote, upon joining of the tubing (102) and the fluidic device (103), a forward motion of the tubing (102) towards a stopper of the tubing (102).

11. The fitting element (100) of claim 1 or any of the above claims, comprising at least one of:
a gripping element configured for promoting - upon coupling of the tubing (102) to the fluidic device (103) - a grip force to mechanically connect the gripping element with the tubing (102);
a joint element configured for joining to the fluidic device (103) by a screw connection.

12. A fitting (100) configured for coupling a tubing (102) to a fluidic device (103), the fitting comprising
a fitting element (100) according to claim 1 or any of the above claims, the fitting element (100) having the tubing (102) and an inlay (210) located in a cavity (400) of a front side (146) of the tubing (102),
wherein the fluidic device (103) comprises a receiving cavity configured for receiving the fitting element (100), upon coupling of the tubing (102) to the fluidic device (103) at least one of the inlay (210) and the front side (146) of the tubing (102) is pressing to a contact surface within the receiving cavity, and the fluid path of the tubing (102) is connected to the fluid path of the fluidic device (103).

13. The fitting (100) of the preceding claim, comprising at least one of:
the fitting element (100) comprises a front ferrule, a back ferrule and a first joint element, the receiving cavity is configured for accommodating the front ferrule and the tubing (102) and has a second joint element configured to be joinable to the first joint element, wherein the back ferrule is configured in such a manner that, upon joining the first joint element to the second joint element, the back ferrule exerts a spring-biased pressing force against the front ferrule to provide a sealing between the front ferrule and the receiving cavity, and the back ferrule exerts a grip force on the tubing (102);
the fluidic device (103) is or comprises at least one of: a second tubing (102), an apparatus, an HPLC device, a fluid separation device, a fluid handling device, a measurement device;
the fluidic device (103) comprises a processing element configured for interacting with a sample fluid;
the fluidic device (103) is configured to at least one of:
conduct a sample fluid through the fluidic device (103),
a fluid separation system for separating compounds of a sample fluid,
a fluid purification system for purifying a sample fluid,
to analyze at least one physical, chemical and/or biological parameter of at least one compound of a sample fluid.

14. A fitting (100) configured for coupling a tubing (102) to a fluidic device (103), the fitting comprising
a fitting element (100) according to any of the claims 1 to 11, the inlay (210) being a first sealing element, the fitting element (100) additionally having a second sealing element,
wherein the fluidic device (103) comprises a receiving cavity configured for receiving the fitting element (100),
upon coupling of the tubing (102) to the fluidic device (103), the first sealing element provides a first sealing stage at a front side (146) of the tubing (102) where the tubing (102) is pressing to a contact surface within receiving cavity, and the second sealing element provides a second sealing stage for sealing the receiving cavity along a side of the tubing (102) within the receiving cavity.

15. A fluid separation system for separating compounds of a sample fluid in a mobile phase, the fluid separation system comprising:
a mobile phase drive, preferably a pumping system, configured to drive the mobile phase through the fluid separation system,
a separation unit, preferably a chromatographic column, configured for separating
compounds of the sample fluid in the mobile phase,
a fitting element (100) according to claim 1 for coupling a tubing (102) for conducting the mobile phase to a fluidic device (103) in the fluid separation system.

## Patentansprüche

1. Ein Fitting Element (100), welches konfiguriert ist, einer fluidischen Vorrichtung (103) eine fluidische Kopplung bereitzustellen, wobei das Fitting Element (100) aufweist:
ein Tubing (102), und
eine Einlage (210), welche sich in einer Kavität (400) einer vorderen Seite (146) des Tubings (102) befindet,
wobei die Einlage (210) über die vordere Seite (146) hervorsteht, zumindest vor einem Koppeln des Tubings (102) an die fluidische Vorrichtung (103),
wobei - auf das Koppeln des Tubings (102) an die fluidische Vorrichtung (103) hin - die vordere Seite (146) an die fluidische Vorrichtung (103) angepasst ist zum Verbinden eines Fluidpfads (410) des Tubings (102) mit einem Fluidpfad (420) der fluidischen Vorrichtung (103), und die Einlage (210) eine Dichtung des Fluidpfads (410, 420) des Tubings (102) und der fluidischen Vorrichtung (103) bereitstellt, und
wobei sich die Kavität (400) in einer zentralen Position der vorderen Seite (146) des Tubings (102) befindet und in den Strömungspfad des Tubings (102) hinein geöffnet ist.

2. Das Fitting Element (100) gemäß Anspruch 1, aufweisend zumindest eines von:
die Einlage (210) ist zumindest eines aus: geformt, formschlüssig, pressgepasst, und fest gekoppelt in der Kavität (400);
die Einlage (210) ist in der Kavität (400) befestigt mittels zumindest einem aus einem Direkt-Formen-Verfahren, einem Schweißverfahren, einem Klebeverfahren, einem thermischen Verfahren, wie beispielsweise Thermoformen, Umgießen, Umschmelzen, partielles Erwärmen, Laser Erwärmen, Ultraschall Erwärmen.

3. Das Fitting Element (100) gemäß Anspruch 1 oder 2, aufweisend zumindest eines von:
die Einlage (210) erstreckt sich seitlich über die Kavität (400) auf die vordere Seite (146) des Tubings (102);
die Einlage (210) erstreckt sich seitlich über die Kavität (400), ist aber begrenzt auf zumindest einen Abschnitt der vorderen Seite (146) des Tubings (102);
die Einlage (210) erstreckt sich seitlich über die Kavität (400), ist aber begrenzt auf die vordere Seite (146) des Tubings (102), so dass - auf das Koppeln des Tubings (102) an die fluidische Vorrichtung (103) hin - die vordere Seite (146) einen Anschlag für eine Vorwärtsbewegung des Tubings (102) darstellt;
auf das Koppeln des Tubings (102) an die fluidische Vorrichtung (103) hin presst die vordere Seite (146) an eine Kontaktseite der fluidischen Vorrichtung (103), zum Koppeln des Fluidpfads des Tubings (102) an den Fluidpfad der fluidischen Vorrichtung (103);
die Einlage (210) weist einen Strömungspfad auf, wobei - auf das Koppeln des Tubings (102) an die fluidische Vorrichtung (103) hin - der Strömungspfad der Einlage (210) zwischen den Strömungspfad des Tubings (102) und den Strömungspfad der fluidischen Vorrichtung (103) gekoppelt ist.

4. Das Fitting Element (100) gemäß Anspruch 1 oder irgendeinem der vorangehenden Ansprüche, aufweisend zumindest eines von:
die Einlage (210) weist eine äußere Oberfläche (550) auf, wobei auf das Koppeln hin die äußere Oberfläche der fluidischen Vorrichtung (103) zugewandt ist, und die äußere Oberfläche eine Struktur (560) aufweist, welche konfiguriert ist zum Erhöhen eines Oberflächendrucks zwischen der Einlage (210) und der fluidischen Vorrichtung (103).

5. Das Fitting Element (100) gemäß dem vorangehenden Anspruch, wobei die Struktur (560) aufweist zumindest eines von:
eine oder mehr Vertiefungen;
eine oder mehr konzentrische Vertiefungen;
einen oder mehr Überstände;
einen oder mehr konzentrische Überstände;
eine oder mehr Mikro-Kavitäten für die weitere Aufnahme von Dichtungskomponenten oder einer Imprägnierung;
einen oder mehr Einschlüsse für die weitere Aufnahme von Dichtungskomponenten oder der Imprägnierung.

6. Das Fitting Element (100) gemäß Anspruch 1 oder irgendeinem der vorangehenden Ansprüche, aufweisend zumindest eines von:
die Einlage (210) ist aus oder weist auf ein Polymer Material, bevorzugt zumindest eines aus PEEK, PEKK, PE und Polyimid;
die Einlage (210) ist aus oder weist auf ein Metall Material, bevorzugt zumindest eines aus Gold, Titan, und einer SST-Legierung;
das Tubing (102) ist aus oder weist auf zumindest eines aus einer Gruppe bestehend aus einem Metall, rostfreiem Stahl, Titan, einem Kunststoff, einem Polymer, Glas, und Quarz;
das Tubing (102) hat ein Lumen, welches einen Durchmesser hat, der geringer als 0,8 mm ist, insbesondere geringer als 0,2 mm;
das Tubing (102) hat eines von einer kreisförmigen, elliptischen oder rechteckigen Form;
das Tubing (102) ist oder weist auf eine Kapillare;
das Tubing (102) weist ein inneres Tubing (570) und ein äußeres Tubing (102) auf, wobei das äußere Tubing (102) das innere Tubing (570) umgibt;
das Tubing (102) weist ein inneres Tubing (570) und ein äußeres Tubing (575) auf, wobei das äußere Tubing (575) das innere Tubing (570) umgibt, wobei das innere Tubing (570) aus einem verschiedenen Material besteht als das äußere Tubing (575);
einen Sockel (580), welcher das Tubing (102) umgibt;
das Tubing (102) weist ein inneres Tubing (570) und ein äußeres Tubing (575) auf, wobei das innere Tubing (570) aus einem Polymer Material besteht, wobei die Einlage (210) aus einem Polymer Material ist oder ein Polymer Material aufweist, bevorzugt zumindest eines aus PEEK und Polyimid, und wobei die Einlage (210) das innere Tubing (570) abdichtet, um zu verhindern, dass irgendein Fluid in das äußere Tubing (575) eindringt.

7. Das Fitting Element (100) gemäß Anspruch 1 oder irgendeinem der vorangehenden Ansprüche, aufweisend:
ein weiteres Dichtungselement, welches konfiguriert ist zum Abdichten gegen einen Druck in dem Fluidpfad des Tubings (102).

8. Das Fitting Element (100) des vorangehenden Anspruchs, aufweisend zumindest eines von:
das weitere Dichtungselements weist eine vordere Ferrule auf;
das weitere Dichtungselement weist eine vordere Ferrule auf, wobei die vordere Ferrule auf dem Tubing (102) verschiebbar ist, zumindest vor dem Koppeln des Tubings (102) an die fluidische Vorrichtung (103);
das weitere Dichtungselement weist eine vordere Ferrule auf, welche einen konisch zulaufenden vorderen Teil hat, welcher konfiguriert ist, zu einem konischen Abschnitt einer Aufnahmekavität der fluidischen Vorrichtung (103) zu korrespondieren, wobei auf das Koppeln des Tubings (102) an die fluidische Vorrichtung (103) hin der konisch zulaufende vordere Teil gegen den konischen Abschnitt der Aufnahmekavität presst zum Abdichten gegen den Druck in dem Fluidpfad des Tubings (102);
das weitere Dichtungselement ist konfiguriert zum Abdichten einer Aufnahmekavität der fluidischen Vorrichtung (103), wenn die Aufnahmekavität das Fitting Element (100) aufnimmt, auf das Koppeln des Tubings (102) an die fluidische Vorrichtung (103) hin;
das weitere Dichtungselement ist konfiguriert zum Abdichten einer Aufnahmekavität der fluidischen Vorrichtung (103), wenn die Aufnahmekavität das Fitting Element (100) aufnimmt, auf das Koppeln des Tubings (102) an die fluidische Vorrichtung (103) hin, wobei die Einlage (210) die Aufnahmekavität an der vorderen Seite (146) des Tubings (102) abdichtet, und das weitere Dichtungselement ferner die Aufnahmekavität entlang einer Seite des Tubings (102) innerhalb der Aufnahmekavität abdichtet.

9. Das Fitting Element (100) gemäß Anspruch 1 oder irgendeinem der vorangehenden Ansprüche, aufweisend
ein Vorspannelement, welches konfiguriert ist zum Pressen - auf das Koppeln des Tubings (102) an die fluidische Vorrichtung (103) hin - der vorderen Seite (146) des Tubings (102) in eine axiale Richtung des Tubings (102) gegen die fluidische Vorrichtung (103).

10. Das Fitting Element (100) des vorangehenden Anspruchs, aufweisend zumindest eines von:
das Vorspannelement übt zumindest eine von einer federbelasteten und einer feder-vorgespannten Presskraft auf die vordere Seite (146) des Tubings (102) aus;
ein Federelement, welches konfiguriert ist, auf ein Verbinden des Tubings (102) und der fluidischen Vorrichtung (103) hin, eine Vorwärtsbewegung des Tubings (102) hin zu der fluidischen Vorrichtung (103) zu fördern;
ein Federelement, welches konfiguriert ist, auf ein Verbinden des Tubings (102) und der fluidischen Vorrichtung (103) hin, eine Vorwärtsbewegung des Tubings (102) hin zu einem Anschlag des Tubings (102) zu fördern.

11. Das Fitting Element (100) gemäß Anspruch 1 oder irgendeinem der vorangehenden Ansprüche, aufweisend zumindest eines von:
ein Klemmelement, welches konfiguriert ist zum Fördern - auf das Koppeln des Tubings (102) an die fluidische Vorrichtung (103) hin - einer Klemmkraft, um das Klemmelement mit dem Tubing (102) mechanisch zu verbinden;
ein Verbindungselement, welches konfiguriert ist zum Verbinden mit der fluidischen Vorrichtung (103) mittels einer Schraubenverbindung.

12. Ein Fitting (100), welches konfiguriert ist zum Koppeln eines Tubings (102) an eine fluidische Vorrichtung (103), wobei das Fitting aufweist
ein Fitting Element (100) gemäß Anspruch 1 oder irgendeinem der vorangehenden Ansprüche, wobei das Fitting Element (100) ein Tubing (102) und eine Einlage (210) hat, welche sich in einer Kavität (400) einer vorderen Seite (146) des Tubings (102) befindet,
wobei die fluidische Vorrichtung (103) eine Aufnahmekavität aufweist, welche konfiguriert ist zum Aufnehmen des Fitting Elements (100), wobei auf das Koppeln des Tubings (102) an die fluidische Vorrichtung (103) hin zumindest eines von der Einlage (210) und der vorderen Seite (146) des Tubings (102) an eine Kontaktoberfläche innerhalb der Aufnahmekavität presst, und der Fluidpfad des Tubings (102) mit dem Fluidpfad der fluidischen Vorrichtung (103) verbunden ist.

13. Das Fitting (100) gemäß dem vorangehenden Anspruch, aufweisend zumindest eines von:
das Fitting Element (100) weist eine vordere Ferrule, eine hintere Ferrule und ein erstes Verbindungselement auf, wobei die Aufnahmekavität konfiguriert ist zum Aufnehmen der vorderen Ferrule und des Tubings (102) und ein zweites Verbindungselement hat, welches konfiguriert ist, mit dem ersten Verbindungselement verbindbar zu sein, wobei die hintere Ferrule auf eine Weise konfiguriert ist, so dass auf ein Verbinden des ersten Verbindungselements mit dem zweiten Verbindungselement hin die hintere Ferrule eine feder-vorgespannte Presskraft gegen die vordere Ferrule ausübt, um eine Dichtung zwischen der vorderen Ferrule und der Aufnahmekavität auszuüben, und die hintere Ferrule eine Klemmkraft auf das Tubing (102) ausübt;
die fluidische Vorrichtung (103) ist oder weist auf zumindest eines von: ein zweites Tubing (102), eine Vorrichtung, eine HPLC Vorrichtung, eine Fluid Trennvorrichtung, eine Fluid Handhabungsvorrichtung, eine Messvorrichtung;
die fluidische Vorrichtung (103) weist ein Verarbeitungselement auf, welches konfiguriert ist zum Interagieren mit einem Probe Fluid;
die fluidische Vorrichtung (103) ist konfiguriert, um zumindest eines von:
ein Probe Fluid durch die fluidische Vorrichtung (103) hindurch zu leiten,
ein Fluid Trennsystem zum Trennen von Komponenten eines Probe Fluids,
ein Fluid Aufreinigungssystem zum Aufreinigen eines Probe Fluids,
um zumindest einen physikalischen, chemischen und/oder biologischen Parameter von zumindest einer Komponente eines Probe Fluids zu analysieren.

14. Ein Fitting (100), welches konfiguriert ist zum Koppeln eines Tubings (102) an eine fluidische Vorrichtung (103), wobei das Fitting aufweist
ein Fitting Element (100) gemäß irgendeinem der Ansprüche 1 bis 11, wobei die Einlage (210) ein erstes Dichtungselement ist, wobei das Fitting Element (100) zusätzlich ein zweites Dichtungselement hat,
wobei die fluidische Vorrichtung (103) eine Aufnahmekavität aufweist, welche konfiguriert ist zum Aufnehmen des Fitting Elements (100),
wobei, auf das Koppeln des Tubings (102) an die fluidische Vorrichtung (103) hin, das erste Dichtungselement eine erste Dichtungsstufe an einer vorderen Seite (146) des Tubings (102) bereitstellt, wo das Tubing (102) an eine Kontaktoberfläche innerhalb der Aufnahmekavität presst, und das zweite Dichtungselement eine zweite Dichtungsstufe zum Abdichten der Aufnahmekavität entlang einer Seite des Tubings (102) innerhalb der Aufnahmekavität bereitstellt.

15. Ein Fluid Trennsystem zum Trennen von Komponenten eines Probe Fluids in einer mobilen Phase, wobei das Fluid Trennsystem aufweist:
einen mobile Phase Antrieb, bevorzugt ein Pumpsystem, welcher konfiguriert ist, um die mobile Phase durch das Fluid Trennsystem hindurch anzutreiben,
eine Trenneinheit, bevorzugt eine Chromatographiesäule, welche konfiguriert ist zum Trennen von Komponenten des Probe Fluids in der mobilen Phase,
ein Fitting Element (100) gemäß Anspruch 1 zum Koppeln eines Tubings (102) zum Leiten der mobilen Phase zu einer fluidischen Vorrichtung (103) in dem Fluid Trennsystem.

## Revendications

1. Elément de raccord (100) configuré pour fournir un couplage fluidique à un dispositif fluidique (103), l'élément de raccord (100) comprenant :
une tubulure (102), et
une incrustation (210) située dans une cavité (400) d'un côté avant (146) de la tubulure (102),
dans lequel l'incrustation (210) fait saillie au-dessus du côté avant (146), au moins avant le couplage de la tubulure (102) au dispositif fluidique (103),
- lors du couplage de la tubulure (102) au dispositif fluidique (103), le côté avant (146) est raccordé au dispositif fluidique (103) pour relier une voie de fluide (410) de la tubulure (102) à une voie de fluide (420) du dispositif fluidique (103), et l'incrustation (210) fournit une étanchéité de la voie de fluide (410, 420) de la tubulure (102) et du dispositif fluidique (103), et
la cavité (400) est située à une position centrale du côté avant (146) de la tubulure (102) et elle s'ouvre dans la voie d'écoulement de la tubulure (102).

2. Elément de raccord (100) selon la revendication 1, comprenant au moins l'un de :
l'incrustation (210) qui est au moins l'une de : formée, ajustée, pressée et couplée fixement dans la cavité (400) ;
l'incrustation (210) est fixée dans la cavité (400) par au moins l'un d'un processus de moulage direct, d'un processus de soudage, d'un processus de collage, d'un processus thermique, comme un thermoformage, une refonte, une refusion, un chauffage partiel, un chauffage laser, un chauffage ultrasonique.

3. Elément de raccord (100) selon la revendication 1 ou 2, comprenant au moins l'un de :
l'incrustation (210) s'étend latéralement au-dessus de la cavité (400) sur le côté avant (146) de la tubulure (102) ;
l'incrustation (210) s'étend latéralement au-dessus de la cavité (400) mais est limitée à au moins une portion du côté avant (146) de la tubulure (102) ;
l'incrustation (210) s'étend latéralement au-dessus de la cavité (400) mais est limitée au côté avant (146) de la tubulure (102), de sorte que, lors du couplage de la tubulure (102) au dispositif fluidique (103), le côté avant (146) représente une butée pour un déplacement vers l'avant de la tubulure (102) ;
lors du couplage de la tubulure (102) au dispositif fluidique (103), le côté avant (146) presse contre un côté de contact du dispositif fluidique (103) pour coupler la voie de fluide de la tubulure (102) à la voie de fluide du dispositif fluidique (103) ;
l'incrustation (210) comprend une voie d'écoulement, dans lequel, lors du couplage de la tubulure (102) au dispositif fluidique (103), la voie d'écoulement de l'incrustation (210) est couplée entre la voie de fluide de la tubulure (102) et la voie de fluide du dispositif fluidique (103).

4. Elément de raccord (100) selon la revendication 1 ou l'une quelconque des revendications précédentes, comprenant au moins l'un de :
l'incrustation (210) comprend une surface extérieure (550), dans lequel la surface extérieure fait face au dispositif fluidique (103) lors du couplage, et la surface extérieure comprend une structure (560) configurée pour augmenter une pression de surface entre l'incrustation (210) et le dispositif fluidique (103).

5. Elément de raccord (100) selon la revendication précédente, dans lequel la structure (560) comprend au moins l'une de :
une ou plusieurs indentations ;
une ou plusieurs indentations concentriques ;
une ou plusieurs protubérances ;
une ou plusieurs protubérances concentriques ;
une ou plusieurs microcavités pour accepter en outre des composants d'étanchéité ou une imprégnation ;
une ou plusieurs inclusions pour accepter en outre des composants d'étanchéité ou une imprégnation.

6. Elément de raccord (100) selon la revendication 1 ou l'une quelconque des revendications précédentes, comprenant au moins l'une de :
l'incrustation (210) comprend ou est constituée d'un matériau polymère, de préférence au moins l'un de PEEK, PEKK, PE et polyimide ;
l'incrustation (210) comprend ou est constituée d'un matériau de métal, de préférence au moins l'un d'or, de titane et d'un alliage SST ;
la tubulure (102) comprend ou est constituée d'au moins l'un d'un groupe se composant d'un métal, d'acier inoxydable, de titane, d'un plastique, d'un polymère, de verre et de quartz ;
la tubulure (102) comprend une lumière dont le diamètre est inférieur à 0,8 mm, en particulier inférieur à 0,2 mm ;
la tubulure (102) présente l'une d'une forme circulaire, d'une forme elliptique ou d'une forme rectangulaire ;
la tubulure (102) est un capillaire ou se compose d'un capillaire ;
la tubulure (102) comprend une tubulure intérieure (102) et une tubulure extérieure (102), la tubulure extérieure (102) entourant la tubulure intérieure (570) ;
la tubulure (102) comprend une tubulure intérieure (570) et une tubulure extérieure (575), la tubulure extérieure (575) entourant la tubulure intérieure (570), la tubulure intérieure (570) se composant d'un matériau différent de la tubulure extérieure (575) ;
une douille (580) entourant la tubulure (102) ;
la tubulure (102) comprenant une tubulure intérieure (570) et une tubulure extérieure (575), la tubulure intérieure (570) se composant d'un matériau polymère, l'incrustation (210) comprenant ou étant constituée d'un matériau polymère, de préférence d'au moins l'un de PEEK et polyimide, et l'incrustation (210) assurant l'étanchéité de la tubulure intérieure (570) pour éviter toute pénétration de fluide dans la tubulure extérieure (575).

7. Elément de raccord (100) selon la revendication 1 ou l'une quelconque des revendications précédentes, comprenant :
un autre élément d'étanchéité configuré pour assurer l'étanchéité contre une pression dans la voie de fluide de la tubulure (102).

8. Elément de raccord (100) selon la revendication précédente, comprenant au moins l'un de :
l'autre élément d'étanchéité comprend un embout avant ;
l'autre élément d'étanchéité comprend un embout avant, dans lequel l'embout avant peut coulisser sur la tubulure (102) au moins avant le couplage de la tubulure (102) au dispositif fluidique (103) ;
l'autre élément d'étanchéité comprend un embout avant comportant une partie avant d'effilement conique configurée pour correspondre à une portion conique d'une cavité de réception du dispositif fluidique (103), dans lequel, lors du couplage de la tubulure (102) au dispositif fluidique (103), la partie avant d'effilement conique presse contre la portion conique de la cavité de réception pour assurer l'étanchéité contre la pression dans la voie de fluide de la tubulure (102) ;
l'autre élément d'étanchéité est configuré pour assurer l'étanchéité d'une cavité de réception du dispositif fluidique (103), lorsque la cavité de réception reçoit l'élément de raccord (100) lors du couplage de la tubulure (102) au dispositif fluidique (103) ;
l'autre élément d'étanchéité est configuré pour assurer l'étanchéité d'une cavité de réception du dispositif fluidique (103), lorsque la cavité de réception reçoit l'élément de raccord (100) lors du couplage de la tubulure (102) au dispositif fluidique (103), dans lequel l'incrustation (210) assure l'étanchéité de la cavité de réception sur le côté avant (146) de la tubulure (102), et l'autre élément d'étanchéité assure en outre l'étanchéité de la cavité de réception le long d'un côté de la tubulure (102) à l'intérieur de la cavité de réception.

9. Elément de raccord (100) selon la revendication 1 ou l'une quelconque des revendications précédentes, comprenant :
un élément de précharge configuré pour presser, lors du couplage de la tubulure (102) au dispositif fluidique (103), le côté avant (146) de la tubulure (102) dans un sens axial de la tubulure (102) contre le dispositif fluidique (103).

10. Elément de raccord (100) selon la revendication précédente, comprenant au moins l'un de :
l'élément de précharge exerce au moins l'une d'une force de pression à charge de ressort et d'une force de pression à contrainte de ressort sur le côté avant (146) de la tubulure (102) ;
un élément de ressort configuré pour promouvoir, lors de la jointure de la tubulure (102) et du dispositif fluidique (103), un déplacement vers l'avant de la tubulure (102) vers le dispositif fluidique (103) ;
un élément de ressort configuré pour promouvoir, lors de la jointure de la tubulure (102) et du dispositif fluidique (103), un déplacement vers l'avant de la tubulure (102) vers une butée de la tubulure (102).

11. Elément de raccord (100) selon la revendication 1 ou l'une quelconque des revendications précédentes, comprenant au moins l'un de :
un élément de préhension configuré pour promouvoir, lors du couplage de la tubulure (102) au dispositif fluidique (103), une force de préhension pour relier mécaniquement l'élément de préhension à la tubulure (102) ;
un élément de jointure configuré pour se joindre au dispositif fluidique (103) par une liaison vissée.

12. Raccord (100) configuré pour coupler une tubulure (102) à un dispositif fluidique (103), le raccord comprenant :
un élément de raccord (100) selon la revendication 1 ou l'une quelconque des revendications précédentes, l'élément de raccord (100) comportant la tubulure (102) et une incrustation (210) située dans une cavité (400) d'un côté avant (146) de la tubulure (102),
dans lequel le dispositif fluidique (103) comprend une cavité de réception configurée pour recevoir l'élément de raccord (100), lors du couplage de la tubulure (102) au dispositif fluidique (103), au moins l'un de l'incrustation (210) et du côté avant (146) de la tubulure (102) presse contre une surface de contact à l'intérieur de la cavité de réception, et la voie de fluide de la tubulure (102) est reliée à la voie de fluide du dispositif fluidique (103).

13. Raccord (100) selon la revendication précédente, comprenant au moins l'un de :
l'élément de raccord (100) comprend un embout avant, un embout arrière et un premier élément de jointure, la cavité de réception est configurée pour recevoir l'embout avant et la tubulure (102) et comporte un deuxième élément de jointure configuré pour pouvoir être joint au premier élément de jointure, dans lequel l'embout arrière est configuré de telle manière que, lors de la jointure du premier élément de jointure au deuxième élément de jointure, l'embout arrière exerce une force de pression à contrainte de ressort contre l'embout avant pour assurer une étanchéité entre l'embout avant et la cavité de réception, et l'embout arrière exerce une force de préhension sur la tubulure (102) ;
le dispositif fluidique (103) est au moins l'un de ou se compose d'au moins l'un de : une deuxième tubulure (102), un appareil, un dispositif HPLC, un dispositif de séparation de fluide, un dispositif de gestion de fluide, un dispositif de mesure ;
le dispositif fluidique (103) comprend un élément de traitement configuré pour interagir avec un échantillon de fluide ;
le dispositif fluidique (103) est configuré pour au moins l'un de :
conduire un échantillon de fluide à travers le dispositif fluidique (103),
un système de séparation de fluide pour séparer des composés d'un échantillon de fluide,
un système de purification de fluide pour purifier un échantillon de fluide,
analyser au moins l'un d'un paramètre physique, chimique et/ou biologique d'au moins un composé d'un échantillon de fluide.

14. Raccord (100) configuré pour coupler une tubulure (102) à un dispositif fluidique (103), le raccord comprenant :
un élément de raccord (100) selon l'une quelconque des revendications 1 à 11, l'incrustation (210) étant un premier élément d'étanchéité, l'élément de raccord (100) comportant en outre un deuxième élément d'étanchéité,
dans lequel le dispositif fluidique (103) comprend une cavité de réception configurée pour recevoir l'élément de raccord (100),
lors du couplage de la tubulure (102) au dispositif fluidique (103), le premier élément d'étanchéité fournit un premier étage d'étanchéité à un côté avant (146) de la tubulure (102) où la tubulure (102) presse contre une surface de contact à l'intérieur de la cavité de réception, et le deuxième élément d'étanchéité fournit un deuxième étage d'étanchéité pour assurer l'étanchéité de la cavité de réception le long d'un côté de la tubulure (102) à l'intérieur de la cavité de réception.

15. Système de séparation de fluide pour séparer des composés d'un échantillon de fluide dans une phase mobile, le système de séparation de fluide comprenant :
un entraînement de phase mobile, de préférence un système de pompage, configuré pour entraîner la phase mobile à travers le système de séparation de fluide,
une unité de séparation, de préférence une colonne chromatographique, configurée pour séparer des composés de l'échantillon de fluide dans la phase mobile,
un élément de raccord (100) selon la revendication 1 destiné à coupler une tubulure (102) pour conduire la phase mobile jusqu'à un dispositif fluidique (103) dans le dispositif de séparation de fluide.
